# EUROPÄISCHE PATENTANMELDUNG

(11) **EP 0 883 105 A1**
(43) Veröffentlichungstag der Anmeldung: **09.12.1998**
(21) Anmeldenummer: 97810342.2
(22) Anmeldetag: 04.06.1997
(51) Int. Cl.: G10K 15/04, G01M 7/08

(54) **Vorrichtung und Verfahren zum Erzeugen einer schlagartig wirkenden Flüssigkeitsfront**

(71) Anmelder: Endress + Hauser Flowtec AG, CH-4153 Reinach BL 1 (CH)
(72) Erfinder: Oertel, Herbert, Prof. Dr.-Ing., D-76275 Ettlingen (DE); Ohle, Frank, Dr. rer. nat., D-79585 Steinen (DE); Maul, Joachim, Dr.-Ing., D-79576 Weil am Rhein (DE)
(74) Vertreter: Morstadt, Volker, Dipl.-Ing.

(57) **Zusammenfassung**

Diese Vorrichtung (1) erzeugt eine Flüssigkeitsfront, die schlagartig mit einem einstellbarem Druck auf eine zu untersuchende Anordnung (12) auftrifft. Die Vorrichtung hat ein Meßrohr (10), innerhalb von dem oder an dem die Anordnung (12) fixiert ist, das eine druckfest eingesetzte Sichtfensteranordnung (13, 14) und ein Überdruckventil (15) aufweist. Ein Druckrohr (20) mit einem ein Gas komprimierenden Druckkolben (28) ist auf einer Seite von der Membran (29) verschlossen, die Teil der das Ventil (25) aufweisenden Kammer (27) ist. Diese ist von der der Membran (29) gegenüberliegenden Membran (19) abgeschlossen. Im Meßrohr (10) ist auf Führungen (17) der Kolben (18) bis zu einer Bremsvorrichtung bewegbar. Zur Durchführung des Verfahrens wird eine das Meßrohr (10) nur teilweise füllende Flüssigkeitsmenge auf den Kolben aufgebracht. In der Kammer (27) wird ein Druck eingestellt wird, der gleich der Hälfte des Berstdrucks der Membranen (29, 19) ist. Der Druck im Druckrohr (20) wird erhöht, bis der Berstdrucks überschritten ist. Dann wird der Druck in der Kammer (27) auf Umgebungsdruck reduziert, wodurch beide Membranen (29, 19) bersten und der Kolben (18) mit der vorgelagerten Flüssigkeitsmenge in Richtung auf die zu messende Anordnung beschleunigt und danach von der Bremsvorrichtung (19) abgefangen wird, während die Flüssigkeitsmenge auf die zu messende Anordnung (12) auftrifft. Deren Strömungsverhalten wird mittels einer optischen Meßtechnik von Kurzzeit-Vorgängen durch die Sichtfensteranordnung (13, 14) hindurch registriert.

## Beschreibung

Die Erfindung betrifft eine Vorrichtung und ein Verfahren zum Erzeugen einer schlagartig wirkenden Flüssigkeitsfront und insbesondere eine Vorrichtung und ein Verfahren zum Erzeugen einer Flüssigkeitsfront, die schlagartig mit einem einstellbaren Druck von größer als 10⁵ Pa (= 1 bar) auf eine hinsichtlich ihres Strömungsverhaltens zu untersuchende Anordnung auftrifft.

Mit einer derartigen Vorrichtung kann z.B. das Verhalten eines Staukörpers eines Wirbel-Durchflußaufnehmers hinsichtlich des im folgenden erläuterten Betriebszustands untersucht bzw. gemessen werden. Bei der Durchflußmessung von Dämpfen, z.B. bei der Durchflußmessung von Wasserdampf, kann es vorkommen, daß in der den Dampf führenden Rohrleitung, z.B. infolge von Druck- und/oder Temperatur-Schwankungen, insb. infolge von Druckerhöhungen, aus dem Dampf Flüssigkeit kondensiert.

Diese wird im weiteren Verlauf der Rohrleitung vom strömenden Dampf mitgerissen und baut sich zu einer Flüssigkeitsfront auf, die mit einem solch erheblichen Druck auf den Staukörper auftrifft, daß er selbst oder ein in, an oder in Strömungsrichtung hinter ihm angeordneter Sensor zerstört werden kann. Dieses Auftreffen der Flüssigkeitsfront wird in der Wasserdampf-Strömungstechnik als Wasserschlag bezeichnet.

Da es sich bei den Wasserschlägen aber im allgemeinen um während des Betriebs der Durchflußaufnehmer lediglich singulär und unregelmäßig auftretende Vorgänge handelt, die herzustellenden Durchflußaufnehmer aber so dimensioniert werden müssen, daß sie durch allfällige Wasserschläge nicht zerstört werden, müssen diese mittels einer Vorrichtung bzw. eines Verfahrens zu entsprechenden Testzwecken gezielt erzeugt werden können.

Zu diesem Zweck besteht die Erfindung daher einerseits in einer Vorrichtung zum Erzeugen einer Flüssigkeitsfront, die schlagartig mit einem einstellbarem Druck von größer als 10⁵ Pa (= 1 bar) auf eine hinsichtlich ihres Strömungsverhaltens zu untersuchende Anordnung auftrifft,
- mit einem Meßrohr,
   -- innerhalb von dem oder an dem die Anordnung fixiert ist,
   -- das mindestens eine druckfest eingesetzte Sichtfensteranordnung und
   -- das mindestens ein Überdruckventil aufweist,
- mit einem Druckrohr,
- mit einem Druckkolben, mittels dessen ein im Druckrohr befindliches Gas komprimierbar ist,
- mit einer das Druckrohr auf einer dem Druckkolben gegenüberliegenden Seite abschließenden ersten Membran,
- mit einer Kammer, von der eine Seite von der ersten Membran gebildet ist und die mindestens ein Ventil aufweist,
- mit einer der ersten Membran gegenüberliegenden und die Kammer abschließenden zweiten Membran,
   -- welche beiden Membranen denselben Berstdruck aufweisen,
- mit einem in einem kammerseitigen Teil des Meßrohrs auf Führungen bewegbaren Kolben,
- mit einer Bremsvorrichtung, die den Kolben am Auftreffen auf die zu messende Anordnung hindert, und
- mit einer Flüssigkeitsmenge, die das Meßrohr nur teilweise füllt und sich auf einer kammer-abgewandten Seite des Kolbens befindet.

Die Erfindung besteht andererseits in einem Verfahren zum Betrieb einer Vorrichtung zum Erzeugen einer Flüssigkeitsfront, die schlagartig mit einem einstellbaren Druck von größer als 10⁵ Pa (= 1 bar) auf eine hinsichtlich ihres Strömungsverhaltens zu untersuchende Anordnung auftrifft,
- mit einem Meßrohr,
   -- innerhalb von dem oder an dem die Anordnung fixiert ist,
   -- das mindestens eine druckfest eingesetzte Sichtfensteranordnung und
   -- das mindestens ein Überdruckventil aufweist,
- mit einem Druckrohr,
- mit einem Druckkolben, mittels dessen ein im Druckrohr befindliches Gas komprimierbar ist,
- mit einer das Druckrohr auf einer dem Druckkolben gegenüberliegenden Seite abschließenden ersten Membran,
- mit einer Kammer, von der eine Seite von der ersten Membran gebildet ist und die mindestens ein Ventil aufweist,
- mit einer der ersten Membran gegenüberliegenden und die Kammer abschließenden zweiten Membran,
   -- welche beiden Membranen denselben Berstdruck aufweisen,
- mit einem in einem kammerseitigen Teil des Meßrohrs auf Führungen bewegbaren Kolben,
- mit einer Bremsvorrichtung, die den Kolben am Auftreffen auf die zu messende Anordnung hindert, und
- mit einer Flüssigkeitsmenge, die das Meßrohr nur teilweise füllt und sich auf einer kammer-abgewandten Seite des Kolbens befindet,
bei welchem Verfahren
- in der Kammer über eines der Ventile ein Druck eingestellt wird, der ungefähr gleich der Hälfte des Berstdrucks der Membranen ist,
- der Druck im Druckrohr durch Verschieben des Druckkolbens soweit erhöht wird, bis der Wert des Berstdrucks geringfügig überschritten ist,
- der Druck in der Kammer über eines der Ventile auf den Umgebungsdruck reduziert wird,
   -- wodurch beide Membranen bersten,
   -- der Kolben mit der vorgelagerten Flüssigkeitsmenge in Richtung auf die zu messende Anordnung beschleunigt und danach von der Bremsvorrichtung abgefangen wird,
   -- während die Flüssigkeitsmenge gegen die zu messende Anordnung weiterfliegt und auf diese auftrifft, und
- das Strömungsverhalten der zu messenden Anordnung mittels einer optischen Meßtechnik von Kurzzeit-Vorgängen durch die Sichtfensteranordnung hindurch festgestellt und/oder registriert wird oder
- das Strömungsverhalten der zu messenden Anordnung mittels eines zu ihr gehörenden Sensors elektronisch festgestellt und/oder registriert wird.

Nach einer ersten bevorzugten Ausgestaltung der Erfindung bestehen die beiden Membranen aus Rein-Aluminium und weisen eine Soll-Bruchstelle auf. Nach einer zweiten bevorzugten Ausgestaltung, die auch bei der ersten bevorzugten Ausgestaltung anwendbar ist, hat das Meßrohr einen quadratischen Querschnitt.

Nach einer dritten bevorzugten Ausgestaltung der Erfindung dient als Flüssigkeit Wasser. Nach einer vierten bevorzugten Ausgestaltung, die auch bei der dritten bevorzugten Ausgestaltung anwendbar ist, dient als Gas Luft.

Ein Vorteil der Erfindung besteht darin, daß mit deren Vorrichtung ein Meßmittel zur Verfügung steht, mit dem energiereiche, insb. hochenergetische, Flüssigkeitsfronten, insb. Wasserschläge, zu frei wählbaren Zeitpunkten gezielt und reproduzierbar erzeugt werden können.

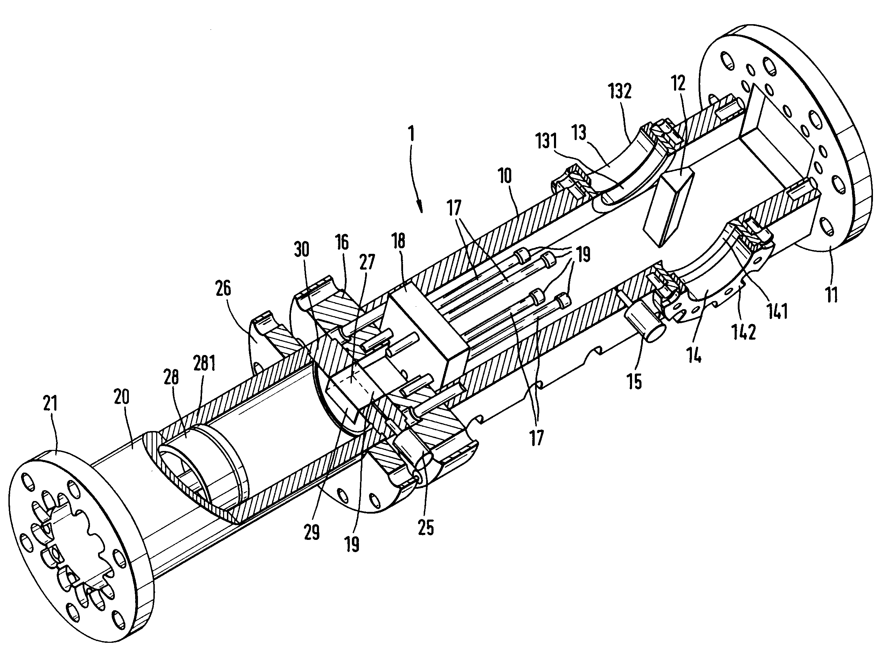

Die Erfindung wird nun anhand der einzigen Figur der Zeichnung näher erläutert, in der ein Ausführungsbeispiel einer Vorrichtung perspektivisch und teilweise aufgeschnitten dargestellt ist.

In der Figur ist, in Längsrichtung verkürzt, eine Vorrichtung 1 zum Erzeugen einer Flüssigkeitsfront, die schlagartig mit einem einstellbaren Druck von größer als 10⁵ Pa (= 1 bar) auf eine hinsichtlich ihres Strömungsverhaltens zu untersuchende Anordnung auftrifft, dargestellt. Die Vorrichtung 1 hat ein Meßrohr 10, dessen Querschnitt bevorzugt quadratisch ist und das aus einem nichtrostenden Material, z.B. aus einem nichtrostenden Stahl oder Alumimium, besteht.

An einem Ende des Meßrohrs 10 ist ein Endflansch 11 angebracht, der mit einigen Bohrungen versehen ist. Über diese läßt sich ein nicht dargestellter Durchflußaufnehmer, z.B. ein nach dem Prinzip der Kármánschen Wirbelstraße arbeitender Wirbel-Durchflußaufnehmer, am Meßrohr 10 befestigen, der einer mittels der Vorrichtung 1 zu erzeugenden Flüssigkeitsfront ausgesetzt werden soll.

Im Ausführungsbeispiel der Figur ist innerhalb des Meßrohrs 10 eine Anordnung 12 fixiert, die hier ein Staukörper eines Wirbel-Durchflußaufnehmers ist. Der Endflansch 11 ist in diesem Fall mit einem nicht dargestellten Blindflansch druckdicht verschlossen.

Im Bereich der Anordnung 12 sind in der Wand des Meßrohrs 10 einander gegenüberliegend eine erste und eine zweite Sichtfensteranordnung 13, 14 druckfest eingesetzt. Diese umfassen in der Figur nicht dargestellte Fenster aus einem Glas. Die beiden Sichtfensteranordnungen 13 bzw. 14 enthalten ferner einen inneren Rahmen 131 bzw. 141 und einen äußeren Rahmen 132 bzw. 142. In der Wand des Meßrohrs 10 ist ein Überdruckventil 15 angebracht, dessen Ansprechdruck niedriger gewählt ist als der Berstdruck der eben erwähnten Fenster.

Am dem Endflansch 11 gegenüberliegenden Ende des Meßrohrs 10 befindet sich ein Binnenflansch 16, in dem zylinderförmige Führungen 17 derart befestigt sind, daß sie in das Lumen des Meßrohrs 10 längs hineinragen und parallel zueinander verlaufen. In der Figur sind vier Führungen 17 dargestellt, es können jedoch auch drei oder mehr als vier vorgesehen sein.

Auf den Führungen 17 ist ein Kolben 18 leicht beweglich angeordnet, der in seiner Ruhestellung an einer Innenseite des Binnenflanschs 16 anliegt. Der Kolben 18 ist auch gegenüber der Innenwand des Meßrohrs 10 leicht beweglich.

Die Führungen 17 sind z.B. in den Binnenflansch 16 eingeschraubt und an den freien Enden jeweils mit einer kopfartigen Verdickung versehen, über die der Kolben 18 sich nicht hinausbewegen kann. Zusammen mit wegen der Übersichtlichkeit nicht dargestellten Spiralfedern bilden die Verdickungen eine Bremsvorrichtung, die den Flug des Kolbens 18, wenn er sich auf die zu messende Anordnung 12 zu bewegt, abbremst und die ihn am Auftreffen auf diese hindert.

Die Vorrichtung 1 umfaßt ferner ein, insb. kreiszylindrisches, Druckrohr 20 mit einem weiteren Binnenflansch 26, der dem Binnenflansch 16 gegenüberliegt und an diesem über die dargestellten Bohrungen unter Zwischenlage eines Distanzstücks 30 befestigt werden kann. Am freien Ende des Druckrohrs 20 ist ein weiterer Endflansch 21 angebracht, an dem über dessen dargestellte Bohrungen z.B. eine Druckzuführung angeschraubt werden kann.

Im Druckrohr 20 ist ein Druckkolben 28 verschiebbar angeordnet, mit dem ein im Druckrohr 20 befindliches Gas, bevorzugt Luft, komprimierbar ist. Der Druckkolben 28 ist daher mit einem auf dessen Innenwand druckdicht gleitenden Dichtring 281 versehen.

Das Druckrohr 20 ist auf einer dem Druckkolben 28 gegenüberliegenden Seite, also an der Außenseite des Binnenflanschs 26, von einer ersten Membran 29 verschlossen. In vergleichbarer Weise ist das Meßrohr 10 an der Außenseite des Binnenflanschs 16 von einer zweiten Membran 19 verschlossen. Diese überdeckt auch eine kolbenseitige Öffnung einer im Distanzstück 30 vorgesehenen Bohrung von bevorzugt quadratischem Querschnitt und die Membran 29 eine druckkolben-seitige Öffnung dieser Bohrung.

Die Membran 19 ist zwischen der Außenseite des Binnenflanschs 16 und der dieser zugewandten Außenseite des Distanzstücks 30 eingespannt und somit gehaltert, wenn die beiden Binnenflansche 16, 26 aneinander befestigt werden, s. o. In vergleichbarer Weise ist die Membran 29 ist zwischen der Außenseite des Binnenflanschs 26 und der dieser zugewandten, anderen Außenseite des Distanzstücks 30 eingespannt und gehaltert.

Wie Versuche gezeigt haben, verhindert der quadratische Querschnitt der Bohrung im Distanzstück 30 weitgehend ein vollständiges Abreißen eines Membranteils von der gerissenen Membran nach deren Bersten, da sich die Teile der gerissenen Membran besser an die Innenwand der Bohrung anlegen als an die Innenwand einer kreis-zylindrischen Bohrung.

Von den beiden Membranen 29, 19 und der Bohrung im Distanzstück 30 wird eine Kammer 27 mit kubus-förmigem Volumen gebildet. Die Kammer 27 ist mit einem Ventil 25 versehen, durch das innerhalb der Kammer 27 ein Überdruck eingestellt und wieder abgelassen werden kann.

Die beiden Membranen 29, 19 weisen denselben Berstdruck auf, bei dem sie zerreißen. Um dies zu erreichen, sind sie bevorzugt mit einer, z.B. durch Prägen erzeugten, Soll-Bruchstelle versehen. Als Material der Membranen 29, 19 hat sich Rein-Aluminium bewährt.

Zur Durchführung des Verfahrens der Erfindung wird die Vorrichtung 1 zunächst in ihren betriebsfertigen Zustand versetzt. Hierzu wird ihre Längsachse senkrecht gestellt. Ferner werden die entsprechend den obigen Ausführungen vorbereiteten Membranen 29, 19 mittels des Distanzstücks 30 und der gegenseitigen Befestigung der Binnenflansche 16, 26 zwischen Meßrohr 10 und Druckrohr 20 eingespannt.

Dabei wird die Dicke der Membranen 29, 19 in Abhängigkeit vom gewünschten Druck, mit dem die Flüssigkeitsfront auf die zu messende Anordnung 12 auftreffen soll, gewählt. Wie durch Versuche und mittels eines Druckmessers leicht festgestellt werden kann, ist die Dicke der Membranen 29, 19 direkt proportional zu diesem Druck: Je dicker die Membranen 29, 19 sind, um so höher ist der von der Flüssigkeitsfront erzeugte Druck.

In den Raum oberhalb des Kolbens 18 wird eine vorgegebene Flüssigkeits-, insb. Wasser-, -Menge, z.B. durch den Endflansch 11 hindurch eingefüllt, deren oberer Spiegel einen Abstand von der zu messenden Anordnung einhält. Die Flüssigkeitsmenge befindet sich also auf einer kammerabgewandten Seite des Kolbens 18.

Ferner wird die zu messende Anordnung 12 im Meßrohr 10 plaziert und der erwähnte Blindflansch mit dem Endflansch 11 verschraubt, oder es wird ein Durchflußaufnehmer am Endflansch 11 druckdicht befestigt. Innerhalb des Meßrohrs 10 herrscht nun Umgebungsdruck. Am anderen Endflansch 21 wird eine Druckapparatur angebracht, aufgrund von deren Druckerhöhung sich der Druckkolben 28 in Richtung auf die Membran 29 bewegen läßt.

Nun wird in der Kammer 27 über das Ventil 25 ein Druck eingestellt, der ungefähr gleich der Hälfte des Berstdrucks der Membranen 29, 19 ist. Anschließend wird der Druck im Druckrohr 20 durch Verschieben des Druckkolbens 28 soweit erhöht, bis der Wert des Berstdrucks geringfügig überschritten ist.

Dann wird der auf etwa die Hälfte des Berstdrucks eingestellte Druck in der Kammer 27 über das Ventil 25 wieder abgelassen, also auf Umgebungsdruck reduziert. Dadurch liegt nun an der Membran 29 eine Druckdifferenz, die größer als ihr Berstdruck ist, so daß sie zerreißt.

Weil das Volumen, das zwischen der Membran 29 und dem Druckkolben 28 vorhanden ist, viel größer als das Volumen der Kammer 27, z.B. 40fach größer, ist, zerreißt anschließend auch die Membran 19, da an ihr eine praktisch gleiche Druckdifferenz wie zuvor an der Membran 19 auftritt und im Meßrohr 10 wie erwähnt Umgebungsdruck herrscht.

Durch den nun auf den Kolben 18 mit der vorgelagerten Flüssigkeitsmenge einwirkenden Druck wird dieser in Richtung auf die zu messende Anordnung 12 beschleunigt und danach von der Bremsvorrichtung abgefangen, wahrend die Flüssigkeitsmenge gegen die zu messende Anordnung 12 weiterfliegt und ihre Front auf diese auftrifft.

Weil die Flüssigkeitsmenge vom Kolben 28 bis zu dessen Abbremsen durch die erwähnte Bremsvorrichtung beschleunigt wird, bleibt die Vorderfront der Flüssigkeitsmenge praktisch eben und zerplatzt nicht in einzelne Tröpfchen.

Der Kolben 18 verhindert, daß sich nach dem Bersten der Membran 19 der Berstdruck sofort im gesamten Lumen des Meßrohrs 10 ausbreitet und auf die Sichtfenster aus Glas einwirkt, wodurch diese zerstört würden. Vielmehr baut sich dieser Druck nur langsam bis zu demjenigen Druckwert auf, bei dem das Überdruckventil 15 anspricht, so daß der Druck im Meßrohr 10 auf diesen wert begrenzt wird.

Im Falle einer zuvor im Meßrohr 10 angebrachten Anordnung 12 wird deren Strömungsverhalten mittels einer optischen Meßtechnik von Kurzzeit-Vorgängen durch die beiden Sichtfensteranordnungen 13, 14 hindurch festgestellt und/oder registriert. Wenn am Endflasch 11 ein Durchflußaufnehmer befestigt ist, wird dessen Strömungsverhalten mittels eines zugehörigen Sensors elektronisch festgestellt und/oder registriert.

Eine realisierte Vorrichtung hatte folgende Bemessung: Der Kolben 18 hat eine Flache von 80x80 mm². Die Membranen 29, 19 bersten bei einem Druck von 10⁷ Pa (= 100 bar). Auf den Kolben 18 wirkt somit eine Kraft von 64.000 N. Der Kolben 18 und die eingefüllte Flüssigkeitsmenge haben eine Gesamtmasse von 1 kg. Diese Masse erfährt somit eine Anfangsbeschleunigung von 64.000 m/s².

Andererseits gilt, daß die Geschwindigkeit der vom Kolben 18 bewegten Flüssigkeitsmenge gleich der Quadratwurzel aus dem durch die Dichte der Flüssigkeit dividierten Druck ist. Somit ergibt sich ein rechnerischer Wert für die Geschwindigkeit der eingefüllten Flüssigkeitsmenge von 100 m/s, die sich theoretisch nach einer Zeit von etwa 1,5 ms und nach einem Weg von etwa 0,08 m einstellt. Bei einem Berstdruck von 5x10⁶ Pa (= 50 bar) werden diese 0,08 m in einer Zeit von etwa 2,2 ms zurückgelegt.

Zur Berücksichtigung von in der Vorrichtung auftretenden Reibungen wird für die Länge des Meßrohrs 10 ein Wert von 0,4 m gewählt. Die Führungen 17 sind 0,18 m lang.

Als optische Meßtechnik der beim Auftreffen der Flüssigkeitsfront auf die Anordnung 12 ablaufenden Kurzzeit-Vorgänge eignet sich besonders gut die Differential-Interferometrie.

Dabei wird jeder Strahl einer monochromatischen Lichtquelle, z.B. einer Lichtbogenlampe, nach Durchlaufen eines vorderen Linsensystems und eines hinter diesem angeordneten, vorderen Polarisationsfilters in einem vorderen Wollaston-Prisma fokussiert. Dieses spaltet den Lichtstrahl in zwei zueinander senkrecht polarisierte Teilstrahlen auf, die aus dem Prisma unter einem festen Winkel austreten und mittels einer folgenden, vorderen Achromatlinse parallelisiert werden.

Die parallelen Teilstrahlen beleuchten das Meßobjekt; bei der Erfindung befinden sich die bisher erwähnten optischen Komponenten z.B. vor der Sichtfensteranordnung 13.

Nach dem Durchqueren des Meßobjekts durchlaufen die Teilstrahlen eine hintere Achromatlinse und darauf ein hinteres Wollaston-Prisma, das die beiden senkrecht polarisierten Teilstrahlen wieder zu einem einzigen Lichtstrahl zusammenführt. Dieser durchläuft noch ein hinteres Polarisationsfilters und darauf ein Objektiv, das die interferierenden Lichtstrahlen auf eine Kamera, z.B. eine mit Charge-Coupled Devices ausgerüstete Kamera, wirft.

In der Meßebene durchlaufen beide Teilstrahlen miteinander identische Wege. Befindet sich darin ein Meßobjekt mit variabler Dichte, also auch variablen Brechungsindizes, so resultieren für die Teilstrahlen unterschiedlich lange optische Wege, deren Differenz zu einer Phasendifferenz führt. Da die Teilstrahlen wieder überlagert werden, also interferieren, ergibt eine Phasendifferenz von 0° oder 360° ein Intensitätsmaximum, eine Phasendifferenz von 180° jedoch Auslöschung.

Die Lichtinsenität hinter dem erwähnten Objektiv ist somit ein Maß für den integralen Dichtegradienten. Dabei entsteht in der Bildebene der Kamera jeder Bildpunkt auf die beschriebene Weise . Es handelt sich also um eine Ganzbild-Differential-Interferometrie.

Diese hat, bezogen auf Messungen zusammen mit der Vorrichtung der Erfindung, u.a. den Vorteil, daß die Empfindlichkeit der Interferometrie-Anordnung an das Meßobjekt angepaßt werden kann.

Ferner ist die Ganzbild-Differential-Interferometrie gegenüber mechanischen Erschütterungen des Meßobjekts unempfindlich, da auf beide Teilstrahlen dieselben Störungen einwirken. Daher hat das Bersten der Membranen 29, 19 praktisch keinen Einfluß auf die Qualität der von der Kamera aufgezeichneten Bilder.

## Patentansprüche

1. Vorrichtung (1) zum Erzeugen einer Flüssigkeitsfront, die schlagartig mit einem einstellbarem Druck von größer als 10⁵ Pa (= 1 bar) auf eine hinsichtlich ihres Strömungsverhaltens zu untersuchende Anordnung (12) auftrifft,
- mit einem Meßrohr (10),
-- innerhalb von dem oder an dem die Anordnung (12) fixiert ist,
-- das mindestens eine druckfest eingesetztes Sichtfensteranordnung (13, 14) und
-- das mindestens ein Überdruckventil (15) aufweist,
- mit einem Druckrohr (20),
- mit einem Druckkolben (28), mittels dessen ein im Druckrohr befindliches Gas komprimierbar ist,
- mit einer das Druckrohr auf einer dem Druckkolben gegenüberliegenden Seite abschließenden ersten Membran (29),
- mit einer Kammer (27), von der eine Seite von der ersten Membran gebildet ist und die mindestens ein Ventil (25) aufweist,
- mit einer der ersten Membran (29) gegenüberliegenden und die Kammer (27) abschließenden zweiten Membran (19),
-- welche beiden Membranen denselben Berstdruck aufweisen,
- mit einem in einem kammerseitigen Teil des Meßrohrs (10) auf Führungen (17) bewegbaren Kolben (18),
- mit einer Bremsvorrichtung, die den Kolben am Auftreffen auf die zu messende Anordnung (12) hindert, und
- mit einer Flüssigkeitsmenge, die das Meßrohr (10) nur teilweise füllt und sich auf einer kammer-abgewandten Seite des Kolbens (18) befindet.

2. Vorrichtung nach Anspruch 1, bei der die beiden Membranen (29, 19) aus Rein-Aluminium bestehen und eine Soll-Bruchstelle aufweisen.

3. Vorrichtung nach Anspruch 1 oder 2, bei der das Meßrohr (10) einen quadratischen Querschnitt hat.

4. Verfahren zum Betrieb einer Vorrichtung zum Erzeugen einer Flüssigkeitsfront, die schlagartig mit einem einstellbarem Druck von größer als 10⁵ Pa (= 1 bar) auf eine hinsichtlich ihres Strömungsverhaltens zu untersuchende Anordnung (12) auftrifft,
- mit einem Meßrohr (10),
-- innerhalb von dem oder an dem die Anordnung (12) fixiert ist,
-- das mindestens eine druckfest eingesetzte Sichtfensteranordnung (13, 14) und
-- das mindestens ein Überdruckventil (15) aufweist,
- mit einem Druckrohr (20),
- mit einem Druckkolben (28), mittels dessen ein im Druckrohr befindliches Gas komprimierbar ist,
- mit einer das Druckrohr auf einer dem Druckkolben gegenüberliegenden Seite abschließenden ersten Membran (29),
- mit einer Kammer (27), von der eine Seite von der ersten Membran gebildet ist und die mindestens ein Ventil (25) aufweist,
- mit einer der ersten Membran (29) gegenüberliegenden und die Kammer (27) abschließenden zweiten Membran (19),
-- welche beiden Membranen denselben Berstdruck aufweisen,
- mit einem in einem kammerseitigen Teil des Meßrohrs (10) auf Führungen (17) bewegbaren Kolben (18),
- mit einer Bremsvorrichtung, die den Kolben am Auftreffen auf die zu messende Anordnung (12) hindert, und
- mit einer Flüssigkeitsmenge, die das Meßrohr (10) nur teilweise füllt und sich auf einer kammer-abgewandten Seite des Kolbens (18) befindet,
bei welchem Verfahren
- in der Kammer (27) über eines der Ventile (25) ein Druck eingestellt wird, der ungefähr gleich der Hälfte des Berstdrucks der Membranen (29, 19) ist,
- der Druck im Druckrohr (20) durch Verschieben des Druckkolbens (28) soweit erhöht wird, bis der Wert des Berstdrucks geringfügig überschritten ist,
- der Druck in der Kammer (27) über eines der Ventile (25) auf den Umgebungsdruck reduziert wird,
-- wodurch beide Membranen (29, 19) bersten,
-- der Kolben (18) mit der vorgelagerten Flüssigkeitsmenge in Richtung auf die zu messende Anordnung beschleunigt und danach von der Bremsvorrichtung (19) abgefangen wird,
-- während die Flüssigkeitsmenge gegen die zu messende Anordnung (12) weiterfliegt und auf diese auftrifft, und
- das Strömungsverhalten der zu messenden Anordnung mittels einer optischen Meßtechnik von Kurzzeit-Vorgängen durch die Sichtfensteranordnung (13, 14) hindurch festgestellt und/oder registriert wird oder
- das Strömungsverhalten der zu messenden Anordnung mittels eines zu ihr gehörenden Sensors elektronisch festgestellt und/oder registriert wird.

5. Verfahren nach Anspruch 4, bei dem als Flüssigkeit Wasser verwendet wird.

6. Verfahren nach Anspruch 4 oder 5, bei dem als Gas Luft verwendet wird.
